(19) Europäisches Patentamt
European Patent Office
Office européen des brevets

(11) **EP 2 732 303 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(51) Int Cl.:
***G01S 5/06*** *(2006.01)*

(21) Anmeldenummer: **12729847.9**

(22) Anmeldetag: **04.05.2012**

(86) Internationale Anmeldenummer:
**PCT/DE2012/000469**

(87) Internationale Veröffentlichungsnummer:
**WO 2013/007227 (17.01.2013 Gazette 2013/03)**

(54) **POSITIONSBESTIMMUNGSSYSTEM UND VERFAHREN ZUM BETREIBEN**

POSITION-DETERMINING SYSTEM AND METHOD FOR THE OPERATION THEREOF

SYSTÈME DE DÉTERMINATION D'UNE POSITION ET PROCÉDÉ PERMETTANT DE FAIRE FONCTIONNER LEDIT SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2011 DE 102011107333**

(43) Veröffentlichungstag der Anmeldung:
**21.05.2014 Patentblatt 2014/21**

(73) Patentinhaber: **Forschungszentrum Jülich GmbH 52425 Jülich (DE)**

(72) Erfinder:
• **SCHELTEN, Jakob**
**52428 Jülich (DE)**
• **SOBOTTA, Karl**
**52382 Niederzler (DE)**
• **ENGELS, Ralf**
**52393 Hürtgenwald (DE)**
• **MÜLLER, Christian**
**52428 Jülich (DE)**

(56) Entgegenhaltungen:
**WO-A1-03/079672      DE-A1-102007 046 366**

• **GUSTAFSSON F ET AL: "Positioning using time-difference of arrival measurements", PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA; [IEEE INTERNATIONAL CONFERENCE ON ACOUSTICS, SPEECH, AND SIGNAL PROCESSING (ICASSP)], IEEE, 2003 IEEE INTERNATIONAL CONFE, Bd. 6, 6. April 2003 (2003-04-06), Seiten VI_553-VI_556, XP010640811, DOI: 10.1109/ICASSP. 2003.1201741 ISBN: 978-0-7803-7663-2**
• **XI HU ET AL: "Sensor Selection for Multiple Sensor Emitter Location Systems", AEROSPACE CONFERENCE, 2008 IEEE, IEEE, PISCATAWAY, NJ, USA, 1. März 2008 (2008-03-01), Seiten 1-10, XP031256301, ISBN: 978-1-4244-1487-1**

EP 2 732 303 B1

**Beschreibung**

Die Erfindung betrifft ein Positionsbestimmungssystem und ein Verfahren zum Betreiben.

Stand der Technik

Bevor die Satellitennavigation zum Standard wurde, war die genaueste in Küstennähe verfügbare Navigationshilfe die Hyperbelnavigation (Decca-Peilung). Dieses System umfasste an Land installierte Sender mit verschiedenen Frequenzen. An Bord eines Schiffes oder Flugzeugs wurden die Signale verschiedener Sender zur Überlagerung gebracht. Da die Linien gleicher Phasenlage Hyperbeln sind, lieferte die Überlagerung der Signale zweier Sender die Information, dass sich das Schiff oder Flugzeug auf einer bestimmten Hyperbel befinden musste. Wurde auch die Überlagerung eines zweiten Senderpaars gemessen, gelangte man zur Information, dass sich das Schiff oder Flugzeug auf dem Schnittpunkt zweier Hyperbeln befinden musste. Spätestens unter Zuhilfenahme der Überlagerung eines dritten Senderpaars war die genaue Position fixiert.

Nachteilig ist dieses System für kleinere Entfernungen bis hinab in den Labormaßstab zu ungenau, und die nötigen Empfangsgeräte sind schlecht miniaturisierbar.

Die WO 03/079672 A1 offenbart ein Verfahren zum Betreiben eines Positionsbestimmungssystems bei dem für die Bestimmung mindestens einer Raumkoordinate der Objektposition mindestens ein erstes Paar aus zwei ortsfesten Empfängern herangezogen wird, zwischen denen sich in dieser Raumkoordinate der Messbereich für die Objektposition befindet.

Auch in der Schrift DE 10 2007 046366 A1 wird ein solches Verfahren beschrieben.

Aufgabe und Lösung

Es ist daher die Aufgabe der Erfindung, ein Positionsbestimmungssystem zur Verfügung zu stellen, das bis hinab zu Entfernungen im Labormaßstab die Ortung eines mobilen Objekts mit höherer Genauigkeit ermöglicht als die Hyperbelnavigation nach dem Stand der Technik. Es ist eine weitere Aufgabe der Erfindung, die vom mobilen Objekt mitzuführende Einheit besser miniaturisierbar zu machen.

Diese Aufgaben werden erfindungsgemäß gelöst durch ein Verfahren zum Betreiben eines Positionsbestimmungssystems gemäß Anspruch 1. Weitere vorteilhafte Ausgestaltungen ergeben sich jeweils aus den darauf rückbezogenen Unteransprüchen.

Gegenstand der Erfindung

Im Rahmen der Erfindung wurde ein Positionsbestimmungssystem zur Ortung eines mobilen Objekts entwickelt. Erfindungsgemäß umfasst dieses System mindestens einen mit dem Objekt verbundenen Sender, mindestens zwei ortsfeste Empfänger sowie Mittel zur Bestimmung der Phasendifferenz, mit der das Signal des Senders bei den beiden Empfängern eintrifft.

Die Begriffe "Sender" und "Empfänger" im Sinne dieser Erfindung beziehen sich auf die Fähigkeit, elektromagnetische Wellen einschließlich Funksignalen und Licht auszustrahlen bzw. zu registrieren.

Im Unterschied zur bekannten Hyperbelnavigation (Decca-Peilung) findet am Ort des mobilen Objekts keine Überlagerung des Signals zweier Sender statt. Stattdessen wird nur am Ort des mobilen Objekts gesendet, und die Messung der Phasendifferenz wird auf die Empfängerseite verlagert. Dies hat die Wirkung, dass am Ort des mobilen Objekts nur ein Sender mit sehr kleinen Abmessungen und sehr kleiner Stromaufnahme benötigt wird. Ein solcher Sender kann beispielsweise in einen Golfschläger und/oder in einen Golfball integriert werden, ohne die Dynamik des Schlags merklich zu beeinflussen. Indem mit dem erfindungsgemäßen System die Position des Senders fortwährend aufgezeichnet wird, können die korrekte Ausführung des Schlags überprüft und Fehler identifiziert werden. Auch können die schnellen Schüttelbewegungen von Parkinson-Patienten registriert werden, ohne dass diese durch eine große Masse des Senders gedämpft werden.

Dass nur am Ort des mobilen Objekts gesendet wird, hat weiterhin die Wirkung, dass mit nur einer Frequenz gearbeitet werden kann. Bei der bekannten Hyperbelnavigation mussten die Sender, deren Signale sich am Ort des mobilen Objekts überlagerten, mit unterschiedlichen Frequenzen arbeiten, damit die Signale voneinander unterscheidbar waren. Diese Frequenzen mussten mit entsprechendem apparativem Aufwand am Ort des mobilen Objekts mit unterschiedlichen ganzzahligen Faktoren auf ein kleinstes gemeinsames Vielfaches vervielfacht werden, damit die Phasendifferenz bestimmt werden konnte. Indem erfindungsgemäß nur eine Frequenz benötigt wird, ist auch nur eine behördliche Zuteilung notwendig. Weiterhin können zur Steigerung der Genauigkeit beliebig viele weitere ortsfeste Empfänger eingesetzt werden, ohne dass zusätzliche Einrichtungen am Ort des mobilen Objekts erforderlich sind.

Dies wird insbesondere relevant in einer besonders vorteilhaften Ausgestaltung der Erfindung. In dieser Ausgestaltung umfasst das System für jede Raumkoordinate der Objektposition, die zu bestimmen ist, mindestens zwei ortsfeste Empfänger, wobei sich der Messbereich für die Objektposition in dieser Raumkoordinate zwischen den beiden Empfängern befindet.

Es wurde erkannt, dass in einem kartesischen Koordinatensystem, in dem die Verbindungslinie zwischen zwei ortsfesten Empfängern auf einer der Achsen liegt, nur die Koordinate auf dieser oder einer dazu parallelen Achse mit großer Genauigkeit bestimmt werden kann. Die Phasendifferenz ergibt sich aus der Differenz der Wege, die das Signal vom Sender zu den beiden Empfängern zurücklegt. Sie hängt dominant von der Raumkoordinate entlang der Verbindungslinie zwischen den Empfängern ab; wird das Objekt entlang dieser Verbindungslinie bewegt, verringert sich der Abstand zum einen Empfänger in dem gleichen Maße, wie sich der Abstand zum anderen Empfänger vergrößert. Wird daher im Rahmen der Messgenauigkeit eine gegebene Phasendifferenz zwischen den an beiden Empfängern eintreffenden Signalen gemessen, ist die Unsicherheit bezüglich der Bewegung entlang der Verbindungslinie, die hierfür verantwortlich sein kann, klein. Die Erfindung macht sich dies zunutze, indem sie in allen Raumrichtungen, in denen die Position des mobilen Objekts zu bestimmen ist, jeweils mindestens eine Verbindungslinie zwischen zwei ortsfesten Empfängern schafft. Jedes Paar von Empfängern mit einer Verbindungslinie in einer Raumrichtung ist dann ein besonders empfindliches Messinstrument für Bewegungen des Objekts in genau dieser Richtung.

Diese stark anisotrope Abhängigkeit der Phasenverschiebung von der Objektbewegung wurde bei der bekannten Hyperbelnavigation nicht genutzt. Jedes Paar Sender, zwischen denen am Ort des mobilen Objekts die Phasenlage bestimmt wurde, lieferte lediglich die Information, dass die aktuelle Objektposition auf einer bestimmten Hyperbel liegen muss. Die Objektposition wurde bestimmt, indem der Schnittpunkt mehrerer solcher Hyperbeln bestimmt wurde. Eine Möglichkeit, die von einzelnen Senderpaaren gelieferte Information bezüglich gewisser Raumrichtungen überzugewichten, war nicht vorgesehen. Es wäre auch nicht einfach gewesen, diese Funktionalität der Hyperbelnavigation hinzuzufügen. Zum einen wurde die Hyperbelnavigation hauptsächlich für die Navigation auf und über See eingesetzt, so dass die Senderstandorte durch die vorhandenen Küsten diktiert wurden. Zum anderen hätte jeder weitere Sender wiederum eine eigene Frequenz benötigt mit der Randbedingung, dass am Ort des mobilen Objekts entsprechende kleinste gemeinsame Vielfache gebildet werden müssen. Dass also erfindungsgemäß die Raumkoordinaten unabhängig voneinander jeweils mit der größten Empfindlichkeit bestimmt werden können, ist mit eine Folge der zuvor beschriebenen Maßnahme, dass nur am Ort des mobilen Objekts gesendet wird.

In einer weiteren besonders vorteilhaften Ausgestaltung der Erfindung weist das System für jede Raumkoordinate der Objektposition mindestens zwei Paare ortsfester Empfänger, also mindestens vier Empfänger, auf.

Es wurde zum einen erkannt, dass die Genauigkeit, mit der die Raumkoordinate des Objekts entlang der Verbindungslinie zwischen den beiden Empfängern eines Paars bestimmt werden kann, mit zunehmender Entfernung des Objekts von dieser Verbindungslinie geringer wird. Indem mehrere Paare zur Verfügung gestellt werden, kann daher die Position des Objekts in einem größeren Raumgebiet mit besserer Genauigkeit verfolgt werden.

Es wurde zum anderen erkannt, dass die Funkübertragung zwischen dem Sender und einem oder mehreren Empfängern, die den Messbereich für die Objektposition umgeben, durch Fremdobjekte gestört sein kann. Beim Durchgang durch Materie wird die Lichtgeschwindigkeit der vom Sender ausgestrahlten Welle um den Brechungsindex dieser Materie herabgesetzt. Dies wirkt wie eine optische Wegverlängerung und ändert die am Empfänger registrierte Phase. Beispielsweise kann bei der Verfolgung eines Golfschlägers oder Golfballs der Spieler zwischen dem Sender und einem oder mehreren Empfängern stehen. Indem nun für jede Raumkoordinate mindestens zwei Empfängerpaare zur Verfügung stehen, können die Werte beider Paare für die Bestimmung der Objektposition herangezogen werden. Beispielsweise können die von beiden Paaren gelieferten Positionen gemittelt oder in sonstiger Weise miteinander verrechnet werden. Es kann aber auch beispielsweise eine Plausibilitätskontrolle stattfinden und die von einem Paar gelieferte Position unberücksichtigt bleiben, wenn sie sich plötzlich sprunghaft ändert.

In einer besonders vorteilhaften Ausgestaltung der Erfindung weist der Sender einen Modulator zur Aufmodulation des Signals auf ein Trägersignal mit höherer Frequenz auf. Weiterhin weist das Positionsbestimmungssystem mindestens einen Demodulator zur Demodulation des Signals aus der von den Empfängern registrierten Mischung von Signal und Trägersignal auf. Dabei sind sowohl Amplituden- als auch Frequenzmodulation möglich. Die auf der Funkstrecke zwischen dem Sender und den Empfängern zu verwendenden Frequenzen sind in aller Regel durch behördliche Zuteilungen vorgegeben. Beispielsweise regelt in Deutschland die Amtsblattverfügung 40/2010 der Bundesnetzagentur die Nutzung von Frequenzen für nicht näher spezifizierte Funkanwendungen mit geringer Reichweite (SRD). Indem die Möglichkeit vorgesehen ist, das Signal auf das Trägersignal aufzumodulieren, kann die Frequenz des Signals unabhängig von dieser Zuteilung rein nach der für die Ortsbestimmung sinnvollen Wellenlänge gewählt werden. Insbesondere kann durch Änderung der Signalfrequenz der räumliche Messbereich für die Positionsbestimmung verändert werden, ohne dass eine neue Frequenzzuteilung für die Funkstrecke zwischen Sender und Empfänger notwendig wird.

Es wurde außerdem erkannt, dass sich die Ausbreitung der Mischung von Signal und Trägersignal vom Sender durch Materie hindurch zu den Empfängern nach den Gesetzmäßigkeiten richtet, die für die Frequenz des Trägersignals gelten. Hierzu zählen insbesondere Absorptionskoeffizient und Brechungsindex für den Durchgang durch Materie. Von den zur Verfügung stehenden Frequenzen für das Trägersignal kann somit diejenige gewählt werden, deren Ausbreitungsbedingungen für die gegebene Situation am besten sind.

In einer weiteren vorteilhaften Ausgestaltung der Erfindung ist der Sender eine Lichtquelle, deren Intensität mit der Frequenz des Signals modulierbar ist. Weiterhin weist das Positionsbestimmungssystem Mittel zur Demodulation eines Signals mit dieser Frequenz aus der von den Empfängern registrierten Lichtintensität auf. Auch in diesem Fall ist die Frequenz des Signals frei wählbar. Die optische Übertragung hat gegenüber der Funkübertragung den Vorteil, dass keine Frequenzzuteilung benötigt wird. Allerdings kann Licht im sichtbaren Bereich und im Infrarotbereich viele Materialien, die ein Funksignal lediglich schwächen und in der Phase verschieben, überhaupt nicht mehr durchdringen.

Im Rahmen der Erfindung wurde auch ein Verfahren zum Betreiben des Positionsbestimmungssystems entwickelt. Erfindungsgemäß wird für die Bestimmung mindestens einer Raumkoordinate der Objektposition mindestens ein erstes Paar aus zwei ortsfesten Empfängern herangezogen, zwischen denen sich in dieser Raumkoordinate der Messbereich für die Objektposition befindet. Wie zuvor ausgeführt, ist diejenige Raumkoordinate, in der die Verbindungslinie zwischen den Empfängern eines Paares liegt, mit diesem Paar am empfindlichsten zu messen.

In einer besonders vorteilhaften Ausgestaltung der Erfindung wird zusätzlich mindestens ein zweites Paar aus zwei weiteren ortsfesten Empfängern herangezogen, zwischen denen sich ebenfalls in der zu bestimmenden Raumkoordinate der Messbereich für die Objektposition befindet. Dann können insbesondere die mit Hilfe beider Paare bestimmten Werte für die Raumkoordinate miteinander verrechnet, insbesondere gemittelt, werden. Auf diese Weise kann die Genauigkeit der Positionsbestimmung gesteigert werden. Wie zuvor ausgeführt, hängt dies damit zusammen, dass die Genauigkeit mit zunehmender Entfernung des Objekts von der Verbindungslinie zwischen den Empfängern eines Paars abnimmt und dass die Funkübertragung zwischen dem Sender und einem oder mehreren Empfängern durch Fremdobjekte gestört sein kann. Alternativ oder auch in Kombination hierzu kann eine nur durch eines der beiden Paare registrierte abrupte Änderung der Objektposition als Indikator für eine gestörte Funkübertragung zwischen dem Sender und diesem Paar gewertet werden. Es kann dann beispielsweise die durch dieses Paar registrierte Objektposition unberücksichtigt bleiben und stattdessen auf die durch das andere Paar registrierte Position zurückgegriffen werden.

In einer besonders vorteilhaften Ausgestaltung der Erfindung wird der Messbereich für die Objektposition derart gewählt, dass die Phasendifferenz zwischen den Empfängern mindestens eines Paares im Intervall $[\pi/2-\pi/3,\pi/2+\pi/3]$ liegt. Die Objektposition geht nur so lange eindeutig aus den gemessenen Phasendifferenzen hervor, wie diese Differenzen innerhalb des offenen Intervalls $< \pi/2 -\pi/2, \pi/2 + \pi/2 >$ liegen. Das Überschreiten dieser Grenze lässt sich nicht feststellen; die Positionsbestimmung wird ohne weitere Ankündigung falsch. Die Beschränkung auf das Intervall $[\pi/2-\pi/3,\pi/2+\pi/3]$ verbessert zum einen die Genauigkeit der Positionsbestimmung. Zum anderen liefert dieses Intervall eine sinnvolle Warnschwelle, bei der Gegenmaßnahmen ergriffen werden können, bevor die Phasendifferenzen auch das Intervall $< \pi/2 -\pi/2, \pi/2 + \pi/2 >$ verlassen und die Positionsbestimmung falsch wird.

Die Größe des Messbereichs ist primär von der Wellenlänge der vom Sender abgegebenen Strahlung abhängig. Bei einer Frequenz um die 100 MHz, was einer Wellenlänge von 3 m entspricht, hat das Intervall $[\pi/2-\pi/3,\pi/2+\pi/3]$ eine räumliche Ausdehnung von 1 m. Vorteilhaft wird daher eine Sendefrequenz zwischen 87,5 und 108 MHz gewählt. Sofern keine Zuteilung für die gewählte Frequenz vorliegt, kann das Signal auf ein Trägersignal mit einer zugeteilten Frequenz moduliert oder durch Modulation der Intensität einer Lichtquelle übertragen werden.

In einer besonders vorteilhaften Ausgestaltung der Erfindung wird mit der Objektposition als Variablen eine Gütefunktion minimiert, die die Differenz des aus der Objektposition errechneten Sinus oder Kosinus der Phasendifferenz für ein Paar und dem gemessenen Sinus oder Kosinus der Phasendifferenz für dieses Paar enthält.

Die Phasendifferenz, mit der das vom Sender ausgestrahlte Signal bei den Empfängern eines Paares einläuft, hängt am empfindlichsten von der Raumkoordinate entlang der Verbindungslinie zwischen den beiden Empfängern ab. Sie hängt jedoch auch noch von den weiteren Raumkoordinaten des mobilen Objekts ab. Analog zur bekannten Hyperbelnavigation sagt die von einem Paar registrierte Phasendifferenz für sich genommen nur aus, dass das mobile Objekt sich irgendwo auf der Oberfläche eines Hyperboloiden befindet. Werden nun unterschiedliche Empfängerpaare für die Bestimmung verschiedener Raumkoordinaten herangezogen, ist es möglich, dass sich die von diesen Paaren gelieferten Informationen in Teilen widersprechen analog der Lösung eines überbestimmten linearen Gleichungssystems. Um aus dieser Datenlage die Objektposition mit der größtmöglichen Genauigkeit zu bestimmen, wird das Kriterium für diese Genauigkeit in der Gütefunktion formuliert. Dieses Kriterium kann beispielsweise die kleinste quadratische Abweichung des berechneten vom gemessenen Sinus oder Kosinus sein.

In einer weiteren vorteilhaften Ausgestaltung der Erfindung enthält die Gütefunktion zusätzlich einen additiven Strafterm, der umso größer ist, je weiter die errechnete Phasendifferenz außerhalb des Intervalls $[\pi/2-\pi/3,\pi/2+\pi/3]$ liegt. Hierin spiegelt sich die Erkenntnis wider, dass die Genauigkeit der Positionsbestimmung in diesem Intervall am größten ist und somit Positionen außerhalb dieses Intervalls tendenziell unglaubwürdiger sind.

Vorteilhaft werden in einem ersten Schritt der Minimumsuche die Raumkoordinaten der Objektposition unabhängig voneinander bestimmt, indem jeweils nur bezüglich einer Koordinate optimiert wird und die anderen festgehalten werden. Dabei kann insbesondere für ein Empfängerpaar bezüglich der Raumkoordinate optimiert werden, deren Achse die Verbindungslinie zwischen den beiden Empfängern enthält oder hierzu parallel ist. Wie zuvor ausgeführt, lässt sich mit dem Empfängerpaar gerade dieses Raumkoordinate mit der größten Empfindlichkeit bestimmen. Die übrigen festgehaltenen Raumkoordinaten können beispielsweise zunächst auf plausible Startwerte gesetzt werden. Wenn später unter Heranziehung der anderen Empfängerpaare bezüglich dieser Koordinaten optimiert worden ist, können die hieraus erhaltenen Werte an die Stelle der Startwerte treten. Vorteilhaft werden also nach Bestimmung aller Raumkoordinaten diese Raumkoordinaten als Startwerte für die nächste Iteration der Minimumsuche verwendet.

Vorteilhaft wird das Minimum mit der Suchstrategie des Goldenen Schnitts gesucht. Bei dieser Suchstrategie wird das Suchintervall systematisch verkleinert, indem es jeweils im Goldenen Schnitt geteilt wird. Diese Strategie ist besonders effizient bei unimodalen Funktionen, also solchen, die genau ein Minimum im vorgegebenen Intervall haben. Da die Position genau eines mobilen Objekts gesucht wird und sich dieses Objekt nicht gleichzeitig an einer zweiten Position befinden kann, gibt es genau eine aufzufindende Objektposition im Messbereich, so dass die Gütefunktion unimodal ist.

Das Positionsbestimmungssystem kann beispielsweise als Experimentiergerät in einem Schülerlabor verwendet werden, um meterlange Spuren mit einer Genauigkeit von etwa 1 mm abzuspeichern. Da die Position mit einer Wiederholrate von etwa 1 kHz erfasst werden kann, lässt sich durch Differentiation auch der Zeitverlauf der Geschwindigkeit und der Beschleunigung mit hinreichender Genauigkeit aufzeichnen. Mit einem etwa golfballgroßen Sender können beispielsweise Wettbewerbe der folgenden Art durchgeführt werden:

- Wer erzielt die größte Geschwindigkeit?

- Wer erreicht die höchste Beschleunigung?

- Wer erreicht die größte Wucht bei Boxschlägen?

- Wer hält den ausgestreckten Arm eine Minute lang am besten in gleicher Position?

- Wer dreht sich am schnellsten auf einen Klavierschemel?

- Wer demonstriert eindrucksvoll die Drehimpulserhaltung auf dem Klavierschemel?

- Wer geht am besten entlang eines nicht gezeichneten sondern nur gedachten Kreis?

Auch die Kinetik klassischer physikalischer Experimente kann mit hoher Genauigkeit aufgezeichnet werden, wie beispielsweise

- freier Fall verschiedener Körper, die sich im Einfluss der Luftreibung voneinander unterscheiden;

- Beschleunigung, mit der das Ende einer herunterhängenden schweren Kette zu Boden geht;

- schiefe Ebene;

- Torsionspendel als ideales Pendel;

- Fadenpendel, insbesondere dessen Nichtlinearität bei größeren Auslenkungen;

- Gummipendel;

- Wasserwellenversuche, wobei der Sender auf dem Wasser schwimmt;

- Newtonsches Gesetz (Kraft = Masse * Beschleunigung);

- Reibungskraft beim Sinken einer Kugel in einer viskosen Flüssigkeit gemäß dem Stokesschen Gesetz;

- Billardstöße;

- Sprünge eines Flummiballs;

- Verfolgung von Spielern und Ball auf einem Fußballfeld, insbesondere Abseits- oder Torfeststellung.

Spezieller Beschreibunsgteil

Nachfolgend wird der Gegenstand der Erfindung anhand von Figuren erläutert, ohne dass der Gegenstand der Erfindung hierdurch beschränkt wird. Es ist gezeigt:

Figur 1: Ausführungsbeispiel des Positionsbestimmungssystems im Labormaßstab.
Figur 2: Skizze des Positionsbestimmungssystems für die Fehlerrechnung.
Figur 3: Ausführungsbeispiel des Positionsbestimmungssystems für dreidimensionale Lokalisierung.
Figur 4: Strahlengang zwischen Sender und Empfänger zur Diskussion des Einflusses von Materie auf die Signalübermittlung.

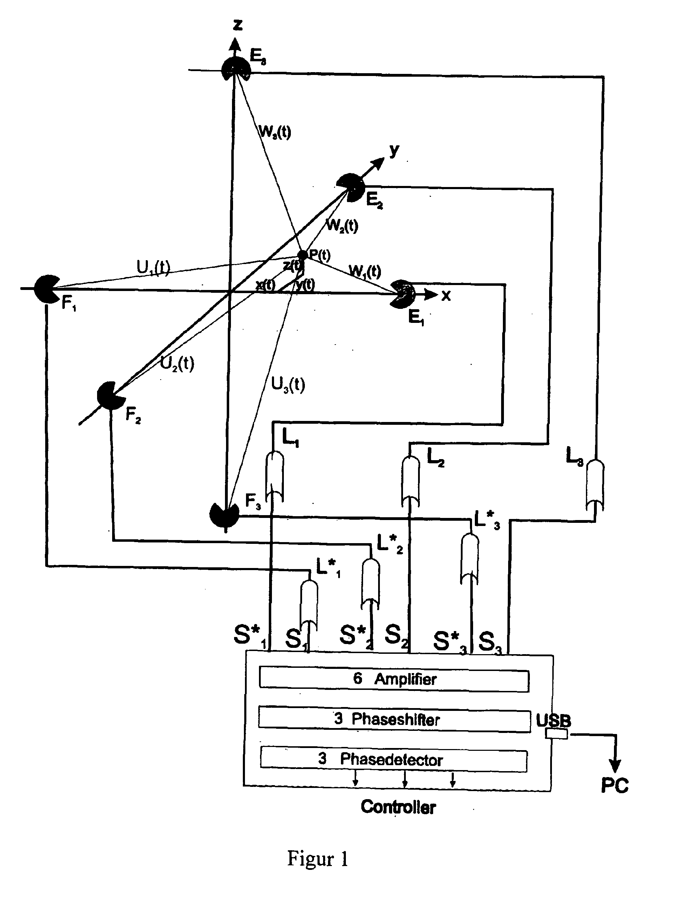

Figur 1 zeigt ein Ausführungsbeispiel eines erfindungsgemäßen Positionsbestimmungssystems im Labormaßstab. Am Ort P(t) (schwarzer Punkt) befindet sich der Sender. Er ist von sechs fest installierten, durch ¾-Kreise symbolisieren Empfängern $E_i$ und $F_i$ (jeweils mit i=1, 2 und 3) umgeben. Sie befinden sich in den Abständen $W_i(t)$ und $U_i(t)$ mit i=1, 2 und 3 vom Ort P(t). Die Empfänger sind passive HF- Bauelemente, die durch Antennenkabel $L_i$ und $L^*_i$ (jeweils mit i=1, 2 und 3) mit dem Controller verbunden sind. Dort werden die Signale mit 6 Verstärkern ("Amplifier") verstärkt, ihre Phasen werden paarweise von drei Phasenschiebern ("Phaseshifter") verschoben und es wird dann die Phasendifferenz von drei Paaren durch insgesamt drei Phasendetektoren ("Phasedetector") gemessen. Für i=1, 2 und 3 bilden die Empfänger $E_i$ und $F_i$ jeweils ein Paar, das Signale $S_i$ und $S^*_i$ an den Controller liefert. Im PC wird daraus der Ort P(t), d. h. seine Koordinaten x(t), y(t) und z(t), bezüglich einer Nullstellung bestimmt.

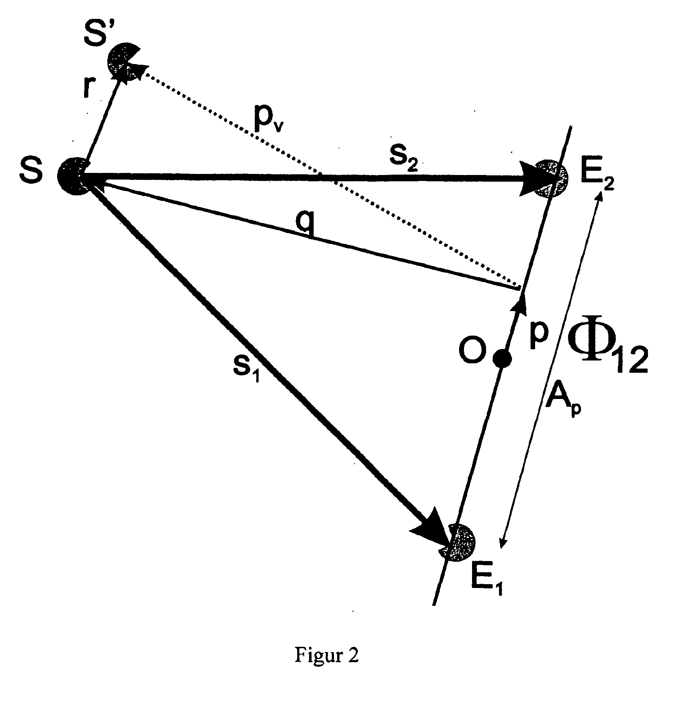

Figur 2 zeigt die Skizze eines erfindungsgemäßen Positionsbestimmungssystems, anhand derer im Folgenden die Genauigkeit und der Messfehler der Positionsbestimmung diskutiert werden. Die Position eines Senders S ist mit Hilfe zweier Empfänger $E_1$ und $E_2$, die sich in Abständen $s_1$ bzw. $s_2$ zur unbekannten Position des Senders befinden, zu ermitteln. Es wird ein rechtwinkliges Koordinatensystem um den Ursprung O in der Mitte der Verbindungsgeraden zwischen $E_1$ und $E_2$ festgelegt. In diesem System hat die unbekannte Position des Senders S die Koordinaten p parallel zur Verbindungsgerade zwischen $E_1$ und $E_2$, q senkrecht zu dieser Verbindungsgeraden und r senkrecht aus der Zeichenebene herausragend. Der Abstand zwischen $E_1$ und $E_2$ wird mit $A_p$ bezeichnet. Der Sender S sendet eine unmodulierte Trägerwelle mit einer Frequenz von 100 MHz (Wellenlänge 3 m) aus.

Die Phasendifferenz, mit der diese Welle die beiden Empfänger $E_1$ und $E_2$ erreicht, wird gemessen und im Folgenden mit $\Phi_{12}$ bezeichnet. Sie ist eindeutig durch die Differenz der Wege zwischen Sender und Empfängern festgelegt, solange sie innerhalb des offenen Intervalls $< \pi/1\ -\pi/2,\ \pi/2 + \pi/2 >$ liegt. Um eine hohe Genauigkeit bei der Ortsbestimmung des Senders zu erzielen, wird das Intervall der Phasendifferenz in diesem Ausführungsbeispiel weiter eingeschränkt auf das Intervall $[\pi/2\ -\pi]3,\ \pi/2 + \pi/3]$.

Die interessierende Phasendifferenz ist gegeben durch

$$\Phi_{12} = \frac{2\pi}{\lambda}\ (\ s_2 - s_1\ ) + \Phi_0$$

(1)

Dabei ist $\Phi_0$ ein frei verfügbarer, zusätzlicher Term.

Gleichung (1) gilt unverändert, wenn das Signal vor der Übermittlung zu den Empfängern auf ein Trägersignal aufmoduliert und nach dem Empfang aus dieser Mischung wieder demoduliert wurde. $\lambda$ ist dann nach wie vor die Wellenlänge des Signals; die Wellenlänge $\lambda_T$ des Trägersignals spielt keine Rolle. Gleiches gilt, wenn die Intensität einer Lichtquelle als Sender mit der Frequenz des Signals moduliert wird.

Die Abstände $s_1$ und $s_2$ sind durch (2) und (3) gegeben.

$$s_1 = \sqrt{(p - \frac{A_p}{2})^2 + q^2 + r^2}$$

(2)

$$s_2 = \sqrt{(p + \frac{A_p}{2})^2 + q^2 + r^2}$$

(3)

Das Ziel besteht darin, aus Phasendifferenzen möglichst genau die Koordinaten des Senders zu bestimmen. Mit einem Phasendetektor wird nicht direkt die Phasendifferenz $F_{12}$ gemessen, sondern nur $\cos(\Phi_{12})$. Die Messgenauigkeit $\delta\Phi_{12}$ ist mit der Messgenauigkeit $\delta c$ von $\cos(\Phi_{12})$ eng verknüpft.

Mit den Gleichungen (1), (2) und (3) kann man aus der $\delta c$ -Genauigkeit auf die mögliche Genauigkeit für die drei Koordinaten schließen, denn es ist:

$$\delta c = \delta \cos(\Phi_{12}) = (-\sin(\Phi_{12})\,\delta\Phi_{12} = (-\sin(\Phi_{12})\frac{2\pi}{\lambda}\,(\,\delta s_2 - \delta s_1\,) \tag{4}$$

und

$$\delta c = (-\sin(\Phi_{12})\frac{2\pi}{\lambda}\left(\frac{\partial(s_2 - s_1)}{\partial p}\delta p + \frac{\partial(s_2 - s_1)}{\partial q}\delta q + \frac{\partial(s_2 - s_1)}{\partial r}\delta r\right) \tag{5}$$

Mit Hilfe von Figur 2 erkennt man, dass sich bei einer Änderung von p die Abstandsdifferenz stark ändert, denn der eine Abstand nimmt zu, der andere nimmt ab. Anders ist das bei der Koordinate q. Hier nehmen beide Abstände $s_1$ und $s_2$ ab, wenn q zunimmt, d. h. die Phasendifferenz ändert sich mit q kaum. Ganz ähnlich ist das bei der dritten Koordinate r.

In (5) ist also in der großen Klammer der erste Term dominant, die beiden anderen sind klein. Damit gewinnt man die Erkenntnis, dass man mit hoher Genauigkeit nur die Koordinate p in Richtung der Verbindungslinie zwischen $E_1$ und $E_2$ messen kann. Ihr Messfehler $\delta p$ ist:

$$\delta p = \frac{1}{2\pi}\frac{\lambda}{\left|(-\sin(\Phi_{12})\frac{\partial(s_2 - s_1)}{\partial p}\right|}\,\delta c \tag{6}$$

Wenn sich der Sender zwischen $E_1$ und $E_2$ befindet, ist die Wegdifferenzänderung maximal: Dann hat der Differentialquotient den Wert 2. Ist auch noch die Phasendifferenz, die ja im Intervall [$\pi/2$ -$\pi/3$, $\pi/2$ + $\pi/3$].liegen soll, gerade $\pi/2$, so erhält man

$$\delta p_{\min} = \frac{\lambda}{2\pi}\frac{1}{2}\,\delta c \tag{7}$$

Mit $\lambda$ = 3m und $\delta c$ = 0.001 erhält man $\delta p_{\min}$= 0.25 mm.

Sorgt man dafür, dass die Phasendifferenz in dem angegebenen Intervall bleibt, so ändert sich $\sin(\Phi_{12})$ in den Grenzen zwischen 0.5 und 1.

Für den allgemeinen Fall, dass der Sender sich relativ zur Empfängermitte O am Ort (p, q, r) befindet, ist der Messfehler für die Koordinate p:

$$\delta p \leq 2\frac{\frac{\lambda}{2\pi}\delta c}{\frac{p + A_p/2}{\sqrt{(p + A_p/2)^2 + q^2 + r^2}} - \frac{p - A_p/2}{\sqrt{(p - A_p/2)^2 + q^2 + r^2}}} \tag{8}$$

In der Gleichung treten q und r nur in der quadratischen Summe $q^2 + r^2$ auf, die im Folgenden mit $p_v^2$ bezeichnet wird ($p_v$ ist in Figur 1 eingezeichnet) und den Abstand des Senders zur Verbindungslinie zwischen $E_1$ und $E_2$ verkörpert. Damit wird der Messfehler begrenzt durch:

$$\delta p \leq 2 \frac{\frac{\lambda}{2\pi} \delta c}{\frac{p + A_p/2}{\sqrt{(p + A_p/2)^2 + p_v^2}} - \frac{p - A_p/2}{\sqrt{(p - A_p/2)^2 + p_v^2}}} \qquad (9)$$

Befindet sich der Sender in der Symmetrieebene, so ist p= 0. In dem Fall ist die Messgenauigkeit einfach

$$\delta p \leq \sqrt{1 + 4(p_v/A_p)^2} \ \frac{\lambda}{2\pi} \ \delta c \qquad (10)$$

Bei einem Abstand $p_v$, fünfmal so groß wie der Empfängerabstand $A_p$, ist der Messfehler

$$\delta p \leq \sqrt{1 + 4 \times 5^2} \ \frac{\lambda}{2\pi} \ \delta c = 5 \ \frac{\lambda}{\pi} = 5 \ mm \qquad (11)$$

und damit 10-mal mal größer als der kleinstmögliche Fehler. Hieraus folgt, dass die Messgenauigkeit einer Koordinate mit zunehmendem Abstand zur Verbindungsachse abnimmt. Daher lässt sich die Genauigkeit steigern, indem für die Messung einer Koordinate mehr als ein Empfängerpaar herangezogen wird.

Die Ortsbestimmung wird komplett falsch, wenn die Phasendifferenz außerhalb des Intervalls < $\pi$/2 -$\pi$/2, $\pi$/2 + $\pi$/2> gerät, sie wird ungenau, wenn die Phasendifferenz außerhalb von [$\pi$/2 -$\pi$/3, $\pi$/2 + $\pi$/3] gerät. Das Überschreiten der ersten Grenze kann nicht wahrgenommen werden, das der zweiten schon.

Die Grenzlinien sind gegeben durch die Randkurven, definiert durch

$$\left| \Phi_{12} - \Phi_0 \right| = \frac{2\pi}{\lambda} \left| s_2 - s_1 \right| = \frac{\pi}{3} \qquad (12)$$

Mit (2) und (3)

$$\left| \sqrt{(p + \frac{A_p}{2})^2 + p_v^2} - \sqrt{(p - \frac{A_p}{2})^2 + p_v^2} \right| = \frac{1}{2} \frac{\lambda}{3} \qquad (13)$$

Wenn der Sender sich entlang der Verbindungsachse bewegt, $p_v$ also gleich Null ist, sind die Schranken eng bei einander, nämlich p = ¼ $\lambda$/3. Im Übrigen beschreibt (13) Rotations- Hyperboloide mit den Brennpunkten $A_p$/2 und -$A_p$/2 und mit dem Wegunterschied $\lambda$/6. Der Bewegungsspielraum innerhalb des durch die maximale Phasendifferenz vorgegebenen Messbereichs wird also umso größer, je weiter der Sender S von der Verbindungslinie zwischen $E_1$ und $E_2$ entfernt ist. Da aus (11) andererseits folgt, dass die Messgenauigkeit mit zunehmendem Abstand $p_v$ zur Verbindungsachse abnimmt, sind eine hohe Messgenauigkeit und ein großer Bewegungsspielraum gegenläufige Ziele.

Aus der vorstehenden Analyse haben die Erfinder die Lehre gezogen, für die Bestimmung der drei Koordinaten (x, y, z) des Senders drei Empfängerpaare einzusetzen, deren Verbindungslinien in die x-, y- bzw. z-Richtung zeigen. Damit wird zur Bestimmung der einzelnen Koordinaten jeweils das Empfängerpaar herangezogen, mit dem sie am empfindlichsten gemessen werden können. Insgesamt wird hiermit mehr Information gemessen als mathematisch für die Positionsbestimmung erforderlich ist. Diese Information kann sich wie bei einem überbestimmten linearen Gleichungssystem zum Teil widersprechen. Um zu der am wenigsten widersprüchlichen Positionsbestimmung des Senders S zu gelangen, wird die Position iterativ bestimmt. Es werden also zunächst für alle Koordinaten plausible Startwerte gesetzt. Anschließend werden die Koordinaten x, y und z nacheinander optimiert, während die beiden anderen Koordinaten jeweils festgehalten werden. Danach wird erneut mit der Optimierung von x, anschließend y und schließlich z fortgefahren. Dies wird solange wiederholt, bis eine vorgegebene Abbruchbedingung erreicht ist.

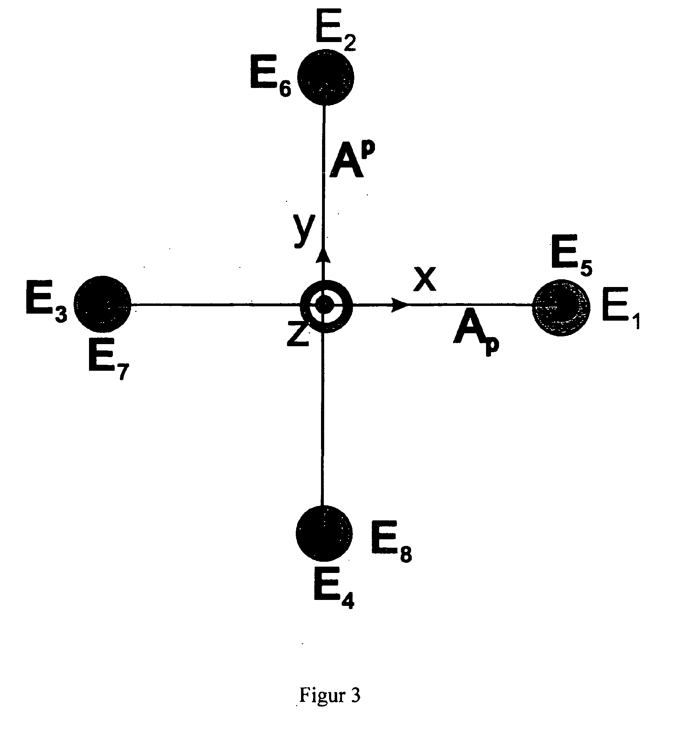

Figur 3 zeigt die Skizze eines weiteren Ausführungsbeispiels des erfindungsgemäßen Positionsbestimmungssystems, das für die dreidimensionale Lokalisierung eines mobilen Objekts innerhalb eines Labors bestimmt ist. Es umfasst acht Empfänger $E_1$ bis $E_8$. Die Empfänger $E_1$ bis $E_4$ sind an der Labordecke aufgehängt, die Empfänger $E_5$ bis $E_8$ befinden sich jeweils um die gleiche Höhe h tiefer. Die Abstände zwischen den Empfängern sowie die Höhe h werden vorteilhaft so gewählt, dass der von den Empfängern umgrenzte Raum möglichst genau den Bereich abdeckt, in dem auch Bewegungen erwartet werden. Dann kann die Position des mobilen Objekts in diesem Bereich mit der größtmöglichen Genauigkeit bestimmt werden. Für die Messung der x-Koordinate stehen zwei Empfängerpaare ($E_1$ mit $E_3$ und $E_5$ mit $E_7$), für die Messung der y-Koordinate ebenfalls zwei Empfängerpaare ($E_2$ mit $E_4$ und $E_6$ mit $E_8$) und für die Messung der z-Koordinate vier Empfängerpaare ($E_1$ mit $E_5$, $E_2$ mit $E_6$, $E_3$ mit $E_7$ und $E_4$ mit $E_8$) zur Verfügung.

Im Folgenden wird erläutert, wie die drei Koordinaten x, y und z iterativ bestimmt werden.

Es wird ein Ort $P_0$ mit den Koordinaten $(x_0, y_0, z_0)$ festgelegt, an dem die Phasendifferenzen aller Paare auf $\pi/2$ gesetzt werden. Das Koordinatensystem ist durch die Verbindungsrichtungen der Paare festgelegt und in Fig. 2 sind sie mit x, y und z bezeichnet. In dem definierten Koordinatensystem haben die Empfänger genau bestimmte Koordinaten, z. B. der Empfänger $E_1$ das Tripel $(xE_1, yE_1, zE_1)$. Der Sender P hat die sich zeitlich ändernden Koordinaten $(x(t), y(t), z(t))$

Die Abstände vom Sender am Ort P zu den Empfänger $E_1$ werden mit $s_1(P)$, bzw., wenn sich der Sender am Ort $P_0$ befindet mit $s_1(P_0)$ bezeichnet. Es ist

$$s_1(P) = \sqrt{(x(t) - xE_1)^2 + (y(t) - yE_1)^2 + (z(t) - zE_1)^2}$$

(15)

Mit dieser Bezeichnung ist die Phasendifferenz zwischen dem Empfängerpaar z. B. $E_i$ und $E_k$ nach Normierung gegeben durch

$$\phi_{ik}(P) = \frac{\pi}{2} + \frac{2\pi}{\lambda}\left\{\left[s_k(P) - s_i(P)\right] - \left[s_k(P_0) - s_i(P_0)\right]\right\}$$

(16)

Der Phasendetektor, der die Phasen der an den beiden Empfängern eintreffenden Welle vergleicht, liefert nicht direkt die Phasendifferenz, sondern ihren Kosinus $\cos(\Phi_{ik}^{exp})$. Für den Test, inwieweit dieser Wert mit einer Senderposition P an den vermuteten Koordinaten (x, y, z) vereinbar ist, wird $\Phi_{ik}(P)$ aus (16) durch Einsetzen der Ausdrücke (15) als Funktion der Koordinaten x, y und z ausgedrückt. Aus der Differenz der beiden Kosinusse wird die folgende Gütefunktion aufgestellt, deren Minimum gesucht ist:

$$Min!\,\Delta(x, y, z) = \left\{ \begin{array}{l} \left[\cos(\phi_{ik}(P)) - \cos(\phi_{ik}^{exp})\right]^2 + \\[2mm] w\left(\phi_{ik}(P) - \frac{\pi}{6}\right)_+^2 + w\left(5\frac{\pi}{6} - \phi_{ik}(P)\right)_+^2 \end{array} \right\}$$

(17)

Minimiert wird so, dass immer zwei Variablen festgehalten werden und die dritte zur Minimierung variiert wird. Die Minimierung bezieht sich nicht allein auf die Differenz von Soll- und Istwert für den Kosinus der Phasendifferenz, sondern berücksichtigt auch, dass im Interesse einer möglichst hohen Messgenauigkeit lediglich das Intervall $\pi/6 < \Phi_{ik}(P) < 5\pi/6$ als Messbereich genutzt werden soll. Eine Überschreitung dieses Messbereichs erhöht die Werte der beiden additiven Strafterme in (17), die jeweils mit einem Faktor w gewichtet sind.

Bei der Straffunktion wurde die Definition benutzt, dass

$$x_+^2 = \begin{Bmatrix} x^2 & x > 0 \\ 0 & sonst \end{Bmatrix}$$

(18)

Diese Funktion ist stetig differenzierbar, die zweite Ableitung ist bei x=0 unstetig.

Für die Minimumsuche wird die Suchstrategie des Goldenen Schnitts eingesetzt in Form der im Buch "Numerical Recipes in C" (W. H. Press et al., Cambridge University Press) beschriebenen Routine "golden". Diese Routine benötigt lediglich eine Umklammerung des Minimums; diese lässt sich aus den Randwerten, dass sich der Sender direkt an einem der beiden Empfänger befindet, gewinnen.

Im nachfolgenden Verfahren mit mindestens drei Empfängerpaaren, deren Verbindungsgrade in x, y, und z Richtung zeigen, wird nacheinander eine Minimierung des ersten Paares hinsichtlich x, dann eine des zweiten Paares hinsichtlich y und schließlich eine des dritten Paares hinsichtlich z durchgeführt. Anschließend wird die nächste Iteration wieder mit der Minimierung hinsichtlich x begonnen, wobei y und z auf den zuvor bestimmten Werten festgehalten werden. Ändert sich bei den Iterationen die Lage ($x_{min}$, $y_{min}$, $z_{min}$) nicht mehr, ist die Lösung selbstkonsistent und wird als Ergebnis für die Senderposition gewertet.

Überprüft werden sollte noch, ob die Zielfunktion im Minimum nahe bei Null liegt und dass die Werte der Straffunktion im Minimum klein sind.

Im Folgenden wird der Einfluss verschiedener Störungen auf die Positionsbestimmung diskutiert.

1. Durchgang des Signals durch Materie

Die Phase der Hochfrequenz an einem der Empfänger wird verändert, wenn sich Materie in den Strahlengang der HF-Welle zwischen Sender und Empfänger stellt. In Materie ist nämlich die Fortpflanzungsgeschwindigkeit einer HF-Welle nicht mehr die Vakuumlichtgeschwindigkeit c, sondern nur noch c/n. Dabei ist n der Brechungsindex des Materials für die verwendete Frequenz. Es ist n = $\varepsilon^{1/2}$ und $\varepsilon$ die Dielektrizitätszahl. Für Fett und Knochen ist bei einer Frequenz von 100 MHz $\varepsilon$ =10 und somit der Brechungsindex n=3,16. Für Muskelmasse ist bei der gleichen Frequenz $\varepsilon$ =100 und damit n=10.

Durchsetzt nun eine HF-Welle eine Wand mit $\infty$-großem Querschnitt, die eine Dicke d und einen Brechungsindex n hat, so ändert sich die Phase am Empfänger um den Wert $\Delta\varphi$

$$\Delta\varphi = \frac{2\pi}{\lambda}(n-1)d$$

(20)

gegenüber vorher ohne Wand. Gleichung (20) hat die in der Praxis fast nie zutreffende Voraussetzung, dass das Störobjekt einen unendlich großen Querschnitt hat.

Falls das Signal vor der Übermittlung vom Sender an die Empfänger auf ein Trägersignal mit höherer Frequenz moduliert wurde, gilt Gleichung (20) nach wie vor für die Phasenverschiebung des Signals. Für n ist jedoch der Brechungsindex der Materie bei der Frequenz des Trägersignals einzusetzen.

Bei dem Einsatz des erfindungsgemäßen Positionierungssystems im Labormaßstab tritt häufiger der Fall auf, dass ein Finger, eine Hand, der Kopf oder der Oberkörper in den Strahlengang zwischen Sender und Empfänger gelangt.

Eine grobe Abschätzung kann man über den Einfluss kleinerer Objekte im Strahl mit dem Huygenschen Prinzip bei der Beugung bekommen, die auf die Fresnelzonen führt.

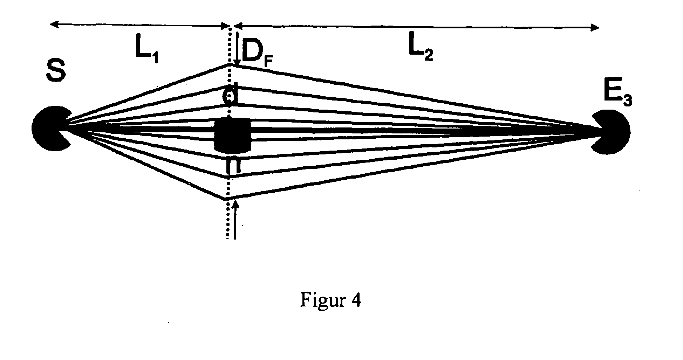

Figur 4 zeigt den Strahlengang zwischen dem Sender S und dem Empfänger $E_3$. Darin sind diejenigen Strahlen eingezeichnet, die sich innerhalb der ersten Fresnelzone mit dem Durchmesser $D_F$ befinden. In dem Strahlengang befindet sich ein würfelförmiges Störobjekt mit Kantenlänge d und Brechungsindex n, wobei d<<$D_F$.

Der Durchmesser der ersten Fresnelzone ist

$$D_F = 2\sqrt{\lambda L_{12}}$$

(21)

mit der Definition

$$\frac{1}{L_{12}} = \frac{1}{L_1} + \frac{1}{L_2}$$

(22)

Es ist $L_{12} < L_1$ und $< L_2$. Bei $L_{12} = 1m$ ist $D_F = 3.4$ m. Strahlen am Rand der ersten Fresnelzone haben gegenüber dem zentralen Strahl einen Wegunterschied von $\lambda/2$.

Es ist die dann auftretende Phasenänderung von der Größenordnung

$$\Delta\varphi = \left(\frac{d}{D_F}\right)^2 2\pi \ (n-1) \frac{d}{\lambda}$$

(23)

oder mit (21) und (22) erhält man

$$\Delta\varphi = \frac{\pi}{2} \ (n-1) \, d \ \left(\frac{1}{L_1} + \frac{1}{L_2}\right)\left(\frac{d}{\lambda}\right)^2$$

(24)

Es wächst danach $\Delta\varphi$ proportional zu $d^3$ und umgekehrt zu $\lambda^2$.

Wurde das Signal vor der Übermittlung vom Sender zu den Empfängern auf ein Trägersignal mit Wellenlänge $\lambda_T$ moduliert, wird Gleichung (24) zu

(24a)

$$\Delta\varphi = \frac{d^3}{\lambda_T \, \lambda \, L_{12}} \frac{\pi}{2} \ (n-1)$$

worin n wiederum der Brechungsindex der Materie für das Trägersignal ist.

Ein paar Zahlenbeispiele vermitteln einen Eindruck von der Stärke des Effekts:

1. Beispiel: d = 10cm (Faust) n = 3 $L_1$ = 1m $L_2 \gg L_1$ $\lambda$=3m: $\Delta\Phi$ = 0.3 mrad.

2. Beispiel: d = 30cm (Kopf) n = 3 $L_1$ = 0.5m $L_2 \gg L_1$ $\lambda$=3m: $\Delta\Phi$ = 9.5 mrad.

3. Beispiel d = 10cm (Faust) n = 3 $L_1$ =0.1m $L_2 \gg L_1$ $\lambda$=3m: $\Delta\Phi$ = 0.3 mrad.

Die Beispiele zeigen, dass die Phasenänderungen teilweise über der Messgrenze von $\sim$ 1.5 mrad liegen. Wurde das Signal auf ein Trägersignal mit höherer Frequenz aufmoduliert, wird der Nenner in Gleichung (24a) kleiner und die Phasendifferenz noch deutlich größer.

2. Reflektierte Strahlung

Die Details zum Reflexionsverhalten von elektromagnetischer Strahlung werden durch die Fresnel-Formeln beschrieben. Beim Grenzübergang Luft Dielektrikum wird bei senkrechtem Einfall nur ein kleiner Teil reflektiert, bei streifendem Einfall deutlich mehr. Bei senkrechter Polarisation ist der reflektierte Strahl gegenüber dem einfallenden Strahl um $\pi$ phasenverschoben. Für die Positionsbestimmung können erst Änderungen der im Empfänger gemessenen Anteile an reflektierter Strahlung hinsichtlich Phase und Amplituden verfälschend wirken.

Die Einflüsse dieser Fehlerquelle können beispielsweise durch Abschirmung, Absorption und gerichtete Antennen minimiert werden.

3. Absorption

Absorption bedeutet eine Schwächung des Empfängersignals. Das ist ohne Belang, denn die Signale werden bei der Phasendetektion normiert.

4. Diffuse Streuung

Weil die Wellenlänge groß gegen fast alle Dimensionen im Raum ist, geschieht die Streuung ohne Bevorzugung von Richtungen und der Anteil an Strahlung, der über diffuse Streuung in den Empfänger gelangt, ist zu gering als dass er die Phase der direkt empfangenen Strahlung beeinflussen könnte.

**Patentansprüche**

1.  Verfahren zum Betreiben eines Positionsbestimmungssystems zur Ortung eines mobilen Objekts, welches mindestens einen mit dem Objekt verbundenen Sender, mindestens zwei ortsfeste Empfänger und Mittel zur Bestimmung der Phasendifferenz, mit der das Signal des Senders bei den beiden Empfängern eintrifft, umfasst, wobei für die Bestimmung mindestens einer Raumkoordinate der Objektposition mindestens ein erstes Paar aus zwei ortsfesten Empfängern herangezogen wird, zwischen denen sich in dieser Raumkoordinate der Messbereich für die Objektposition befindet, **dadurch gekennzeichnet, dass** mit der Objektposition als Variablen eine Gütefunktion minimiert wird, die die Differenz des aus der Objektposition errechneten Sinus oder Kosinus der Phasendifferenz für ein Paar und dem gemessenen Sinus oder Kosinus der Phasendifferenz für dieses Paar enthält und dass die Raumkoordinaten der Objektposition unabhängig voneinander bestimmt werden, indem jeweils nur bezüglich einer Koordinate optimiert wird und die anderen festgehalten werden und dass die Optimierung jeder Raumkoordinate der Objektposition nur anhand der Messungen des Empfängerpaares durchgeführt wird, deren Verbindungslinie parallel zu der jeweiligen Koordinatenachse steht.

2.  Verfahren nach Anspruch 1,
    **dadurch gekennzeichnet,**
    **dass** zusätzlich mindestens ein zweites Paar aus zwei weiteren ortsfesten Empfänger herangezogen wird, zwischen denen sich ebenfalls in der zu bestimmenden Raumkoordinate der Messbereich für die Objektposition befindet.

3.  Verfahren nach Anspruch 2,
    **dadurch gekennzeichnet,**
    **dass** die mit Hilfe beider Paare bestimmten Werte für die Raumkoordinate miteinander verrechnet, insbesondere gemittelt, werden.

4.  Verfahren nach einem der Ansprüche 2 bis 3,
    **dadurch gekennzeichnet,**
    **dass** eine nur durch eines der beiden Paare registrierte abrupte Änderung der Objektposition als Indikator für eine gestörte Funkübertragung zwischen dem Sender und diesem Paar gewertet wird.

5.  Verfahren nach einem der Ansprüche 1 bis 4,
    **dadurch gekennzeichnet,**
    **dass** der Messbereich für die Objektposition derart gewählt wird, dass die Phasendifferenz zwischen den Empfängern mindestens eines Paares im Intervall $[\pi/2-\pi/3, \pi/2+\pi/3]$ liegt.

6.  Verfahren nach Anspruch 1 bis 5,
    **dadurch gekennzeichnet,**
    **dass** die Gütefunktion zusätzlich einen additiven Strafterm enthält, der umso größer ist, je weiter die errechnete Phasendifferenz außerhalb des Intervalls $[\pi/2-\pi/3, \pi/2+\pi/3]$ liegt.

7.  Verfahren nach einem der Ansprüche 1 bis 6,
    **dadurch gekennzeichnet,**
    **dass** nach Bestimmung aller Raumkoordinaten diese Raumkoordinaten als Startwerte für die nächste Iteration der Minimumsuche verwendet werden.

8.  Verfahren nach einem der Ansprüche 1 bis 7,
    **dadurch gekennzeichnet,**
    **dass** das Minimum der Gütefunktion mit der Suchstrategie des Goldenen Schnitts gesucht wird.

**Claims**

1. A method of operating a position-determining system for locating a mobile object, said system comprising at least one transmitter connected to the object, at least two stationary receivers and means for determining the phase difference with which the signal of the transmitter reaches the two receivers, with at least a first pair of two stationary receivers being brought into play for determining at least one space coordinate of the object position and the measuring range for the object position being located at this space coordinate between the two receivers, **characterized in that,**
using the object position as a variable, a merit function is minimized, which includes the difference between the sine or cosine of the phase difference for one pair calculated from the object position and the measured sine or cosine of the phase difference for said pair, **and in that** the space coordinates of the object position are determined independently of one another by optimizing only one coordinate at a time and keeping the others fixed **and in that** the optimization of each space coordinate of the object position is only carried out based on the measurements of the pair of receivers whose connecting line lies parallel to the respective coordinate axis.

2. A method according to Claim 1,
**characterized in that**
at least a second pair of two additional stationary receivers is also brought into play, the measuring range for the object position likewise being located between said receivers at the space coordinate to be determined.

3. A method according to Claim 2,
**characterized in that**
the values for the space coordinate determined by means of both pairs are offset against one another and in particular are averaged.

4. A method according to one of Claims 2 or 3,
**characterized in that**
an abrupt change in the object position registered by only one of the two pairs is deemed to be indicative of a faulty radio transmission between the transmitter and said pair.

5. A method according to one of Claims 1 to 4,
**characterized in that**
the measuring range for the object position is selected so that the phase difference between the receivers of at least one pair lies in the interval $[\pi/2-\pi/3, \pi/2+\pi/3]$.

6. A method according to Claims 1 to 5,
**characterized in that**
the merit function also includes an additive penalty term, which is all the greater, the further the calculated phase difference lies outside of the interval $[\pi/2-\pi/3, \pi/2+\pi/3]$.

7. A method according to one of Claims 1 to 6,
**characterized in that,**
after all the space coordinates have been determined, said space coordinates are used as starting values for the next iteration of the minimum search.

8. A method according to one of Claims 1 to 7,
**characterized in that**
the minimum of the merit function is sought using the golden section search strategy.

**Revendications**

1. Procédé permettant de faire fonctionner un système de détermination de position en vue de la localisation d'un objet mobile qui comprend au moins un émetteur relié à l'objet, au moins deux récepteurs stationnaires et un moyen de détermination de la différence de phase avec laquelle le signal de l'émetteur arrive aux deux récepteurs, pour la détermination d'au moins une coordonnée spatiale de la position d'objet, étant employée au moins une première paire composée de deux récepteurs stationnaires, entre lesquels la plage de mesure pour la position d'objet se trouve dans cette coordonnée spatiale,

**caractérisé en ce**

**qu'**avec la position d'objet en tant que variable une fonction de qualité est minimisée, laquelle contient la différence entre le sinus ou le cosinus de la différence de phase, calculé à partir de la position d'objet, pour une paire et le sinus ou le cosinus mesuré de la différence de phase pour cette paire, et en ce que les coordonnées spatiales de la position d'objet sont déterminées indépendamment les unes des autres du fait que l'optimisation porte respectivement uniquement sur une coordonnée et que les autres sont maintenues inchangées et en ce que l'optimisation de chaque coordonnée spatiale de la position d'objet est exécutée uniquement à l'aide des mesures de la paire de récepteurs dont la ligne de liaison est parallèle à l'axe de coordonnée respectif.

**2.** Procédé selon la revendication 1,
**caractérisé en ce**
**qu'**est employé en plus au moins une seconde paire composée de deux autres récepteurs stationnaires, entre lesquels la plage de mesure pour la position d'objet se trouve également dans la coordonnée spatiale à déterminer.

**3.** Procédé selon la revendication 2,
**caractérisé en ce**
**que** les valeurs déterminées à l'aide des deux paires sont calculées ensemble, en particulier moyennées, pour la coordonnée spatiale.

**4.** Procédé selon l'une quelconque des revendications 2 à 3,
**caractérisé en ce**
**qu'**une modification abrupte de la position d'objet, enregistrée uniquement par une des deux paires, est évaluée en tant qu'indicateur pour une transmission radioélectrique perturbée entre l'émetteur et cette paire.

**5.** Procédé selon l'une quelconque des revendications 1 à 4,
**caractérisé en ce**
**que** la plage de mesure pour la position d'objet est sélectionnée de manière telle que la différence de phase entre les récepteurs d'au moins une paire soit située dans l'intervalle $[\pi/2-\pi/3, \pi/2+\pi/3]$.

**6.** Procédé selon les revendications 1 à 5,
**caractérisé en ce**
**que** la fonction de qualité contient en plus un terme de pénalité additionnel qui est d'autant plus grand que la différence de phase calculée est située en dehors de l'intervalle $[\pi/2-\pi/3, \pi/2+\pi/3]$.

**7.** Procédé selon l'une quelconque des revendications 1 à 6,
**caractérisé en ce**
**que**, après la détermination de toutes les coordonnées spatiales, ces coordonnées spatiales sont utilisées en tant que valeurs initiales pour la prochaine itération de la recherche du minimum.

**8.** Procédé selon l'une quelconque des revendications 1 à 7,
**caractérisé en ce**
**que** le minimum de la fonction de qualité est recherché avec une stratégie de recherche de la section d'or.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03079672 A1

- DE 102007046366 A1

**In der Beschreibung aufgeführte Nicht-Patentliteratur**

- **W. H. PRESS et al.** Numerical Recipes in C. Cambridge University Press